(19) Europäisches Patentamt
European Patent Office
Office européen des brevets

(11)  EP 1 672 652 B1

(12)  **EUROPEAN PATENT SPECIFICATION**

(45) Date of publication and mention
of the grant of the patent:
**23.11.2011  Bulletin 2011/47**

(51) Int Cl.:
*H01G 9/058* (2006.01)     *H01G 9/016* (2006.01)
*C09J 9/02* (2006.01)      *C09J 11/04* (2006.01)

(21) Application number: **04792513.6**

(22) Date of filing: **08.10.2004**

(86) International application number:
**PCT/JP2004/015296**

(87) International publication number:
**WO 2005/036574 (21.04.2005 Gazette 2005/16)**

(54) **ELECTRODE FOR ELECTRIC DOUBLE LAYER CAPACITOR, METHOD FOR PRODUCING SAME, ELECTRIC DOUBLE LAYER CAPACITOR, AND CONDUCTIVE ADHESIVE**

ELEKTRODE FÜR EINEN ELEKTRISCHEN DOPPELSCHICHTKONDENSATOR, HERSTELLUNGSVERFAHREN DAFÜR, ELEKTRISCHER DOPPELSCHICHTKONDENSATOR UND LEITFÄHIGER KLEBSTOFF

ELECTRODE DE CONDENSATEUR DOUBLE COUCHE ELECTRIQUE, PROCEDE DE PRODUCTION DE CE CONDENSATEUR, CONDENSATEUR DOUBLE COUCHE ELECTRIQUE ET ADHESIF CONDUCTEUR

(84) Designated Contracting States:
**AT BE BG CH CY CZ DE DK EE ES FI FR GB GR HU IE IT LI LU MC NL PL PT RO SE SI SK TR**

(30) Priority: **10.10.2003  JP 2003352766**

(43) Date of publication of application:
**21.06.2006  Bulletin 2006/25**

(73) Proprietors:
• **JAPAN GORE-TEX, INC.**
**Setagaya-ku**
**Tokyo 156-8505 (JP)**
• **Hitachi Powdered Metals Co., Ltd.**
**Matsudo-shi,**
**Chiba  270-2295 (JP)**

(72) Inventors:
• **KOBAYASHI, Kotaro,**
**Japan Gore-Tex Inc.**
**Tokyo 156-8505 (JP)**

• **MINAMI, Kazuhiro,**
**Japan Gore-Tex Inc.**
**Tokyo 156-8505 (JP)**
• **TACHIZONO, S.,**
**Hitachi Powdered Metals Co., Ltd.**
**Katori-gun,**
**Chiba 289-2247 (JP)**

(74) Representative: **Shanks, Andrew et al**
**Marks & Clerk LLP**
**Aurora**
**120 Bothwell Street**
**Glasgow**
**G2 7JS (GB)**

(56) References cited:
JP-A- 7 216 330      JP-A- 10 004 037
JP-A- 11 154 628     JP-A- 11 154 630
JP-A- 11 162 787     JP-A- 2000 277 393
JP-A- 2001 307 966   JP-A- 2004 186 218
JP-A- 2004 296 863   US-A- 5 766 753

EP 1 672 652 B1

**Description**

TECHNICAL FIELD

The present invention relates to a collector integrated polarized electrode employed for an electric double-layer capacitor, an electric double-layer capacitor employing the electrode, and an electrically conductive adhesive appropriate for the electrode.

BACKGROUND ART

The following have conventionally been known as an electric double-layer capacitor (an electric double-layer condenser): a type (coin or button type) such that a separator is interposed between a pair of polarized electrode bodies to seal them together with an electrolytic solution by a metal case and a gasket; a type (rolled-up type) such that a continuous electrode sheet and a separator are superposed and rolled up to thus constitute an electric double-layer capacitor unit, which is stored in a metal case and subsequently impregnated with an electrolytic solution and sealed; and a type (stack type) such that a rectangular electrode thin film and a separator are alternately superposed to form an electrode laminate, and then a positive lead and a negative lead are connected to a positive end and a negative end of the electrode by caulking, respectively, to constitute an electric double-layer capacitor unit, which is stored in a metal case and thereafter impregnated with an electrolytic solution and sealed.

Here, in the case of an electric double-layer capacitor in which power is regarded as important, such as an electric car, the capacitor is required to have high energy density and high output density, such that electric capacity per unit volume is high and internal resistance is low. In order to satisfy such requirement, studies have been made on achieving larger area of an electrode body, such that opposed areas of an electrode are enlarged, and a thin film of an electrode body. It is needless to say that the electrode body needs to be superior in mass productivity as an electric double-layer capacitor.

For achieving a larger area of an electrode body and a thin film of an electrode body, a sheet-like or thin film-like electrode body can be manufactured by (1) a method in which a pasty or ink-like mixture containing electrode materials is stuck to a collector by applying, and thereafter dried (solvent removal) and rolled; and (2) a method in which an electrode sheet containing electrode materials is previously fabricated, and then a collector is superposed on a surface of this electrode sheet and integrated by a pressure roller, in which the method (1) it is difficult to achieve higher density and higher capacity of an electrode body, so that the method (2) is generally used at present.

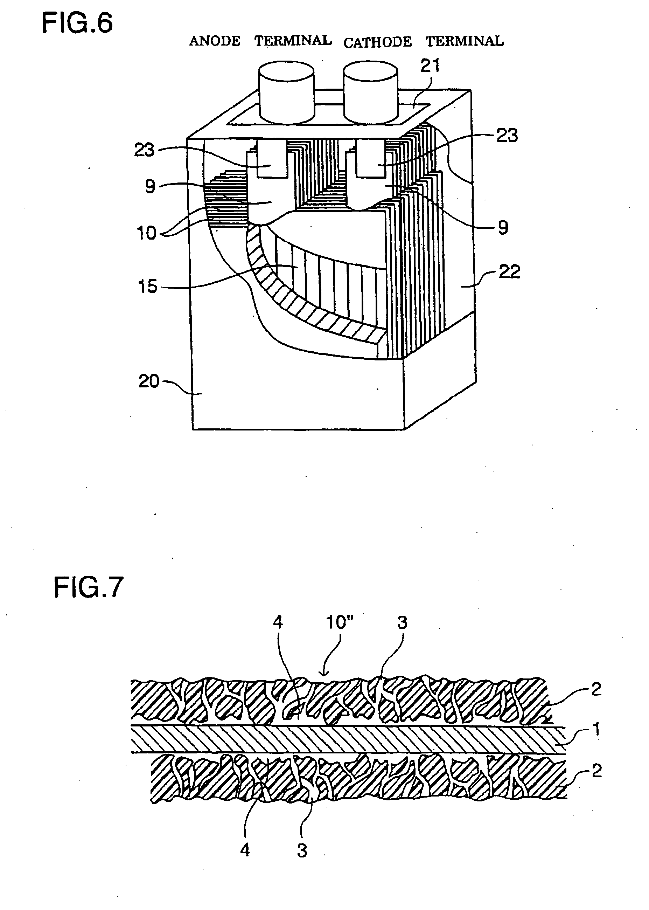

In the above-mentioned manufacturing method (2), improvement in the contact and integration of electrode materials with a collector is important for decreasing internal resistance in an electric double-layer capacitor. Here, a blend of a binding agent into highly conductive carbon-based powdery particles such as activated carbon (carbonaceous materials for forming an electric double-layer) and acetylene black is generally used as electrode materials. Fig. 7 shows an example of such an electrode 10", and an electrode sheet 2 composed of carbon-based particles and a binding agent is a porous layer having a hole 3 and a surface thereof is an uneven face. In this case, when a metallic foil and a metallic sheet with a smooth surface are used as a collector 1, the interface between the collector 1 and the electrode sheet 2 becomes point contact to decrease a substantial contact area. This becomes a cause of deteriorating the properties of an electric double-layer capacitor for the reason that electric resistance is increased due to the enlargement of an air portion (a liquid phase portion in the case of injecting an electrolytic solution) 4 intervening between the collector 1 and the electrode sheet 2.

As a polarized electrode body capable of solving such a problem, for example, JP-A 11-154630 proposes a polarized electrode body such that a porous electrode sheet (a polarized porous sheet) and a collector are laminated through an electrically conductive intermediate layer, in which a part of the electrically conductive intermediate layer enters a hole portion of the electrode sheet.

A polarized electrode body disclosed in JP-A 11-154630 has lower internal resistance than conventionally, so that an electric double-layer capacitor employing this polarized electrode body has superior electric capacity and low internal resistance as compared with a conventional electric double-layer capacitor, and the electrode body is superior in productivity.

With regard to an electric double-layer capacitor, when moisture is adsorbed in an electrode, moisture adsorbed in an electrode is electrolyzed on the occasion of using the capacitor, which phenomenon becomes a cause of deteriorating the performance of the capacitor.

An electrode for an electric double-layer capacitor, therefore, is subjected to drying treatment before being used for a capacitor, and from the viewpoint of more highly preventing deterioration in performance of an electric double-layer capacitor and additionally ameliorating productivity of the electrode and by extension an electric double-layer capacitor, it is required that moisture in the electrode is completely removed in a short time, and drying treatment at higher temperatures is requested in accordance therewith.

JP 11-162787 A discloses the preamble of the independent claims.

The present invention has been made in light of the above-mentioned circumstances, and an object thereof is to provide an electrode and a manufacturing method thereof, which electrode has high thermoresistance adhesive property of a polarized porous sheet to a collector and can resist drying treatment at higher temperatures, and additionally has low internal resistance and is easily subjected to continuous production, and can secure high electric capacity at low internal resistance in the case of being employed for an electric double-layer capacitor, and to provide an electric double-layer capacitor employing the electrode and an electrically conductive adhesive appropriate for the electrode.

DISCLOSURE OF THE INVENTION

An electrode for an electric double-layer capacitor of the present invention, which is capable of achieving the above-mentioned object, has a main point in that a polarized porous sheet comprising constituent materials including carbonaceous materials for forming an electric double-layer (such as activated carbon), carbon materials for securing electrical conductivity and a binding agent is integrated with at least one face of a collector through an electrically conductive intermediate layer, in which the above-mentioned electrically conductive intermediate layer contains synthetic rubber and carbon materials of two kinds or more having different particle diameters. "Sheet" referred to in this specification is a concept including so-called "film" as well.

The above-mentioned electrode preferably contains flake-like graphite and/or carbon black as carbon materials of the above-mentioned electrically conductive intermediate layer.

The above-mentioned synthetic rubber constituting the above-mentioned electrically conductive intermediate layer is preferably styrene-butadiene rubber and, additionally, styrene-butadiene rubber preferably has a glass transition temperature of -5 to 30°C.

It is recommended that the above-mentioned electrically conductive intermediate layer is formed by using an electrically conductive adhesive containing the above-mentioned carbon materials, synthetic rubber and a dispersion medium, and all carbon materials are 3 to 30 mass % in the electrically conductive adhesive and the above-mentioned synthetic rubber is 7 mass % or less in the electrically conductive adhesive.

It is desirable that the above-mentioned polarized porous sheet is a porous body and has an average pore diameter of 0.1 to 5 $\mu$m and a porosity of 40 to 90%. The above-mentioned collector is preferably composed of aluminum and a surface thereof is recommended to be subjected to roughening treatment.

The above-mentioned electrode for an electric double-layer capacitor of the present invention can be manufactured by applying (C) an electrically conductive adhesive containing synthetic rubber, carbon materials of two kinds or more having different particle diameters and a dispersion medium to a joint surface of (A) a polarized porous sheet comprising constituent materials including carbonaceous materials for forming an electric double-layer (such as activated carbon), carbon materials for securing electrical conductivity and a binding agent and/or (B) a collector to press a part of a nonvolatile component of the electrically conductive adhesive into a pore of the polarized porous sheet by sticking and pressurizing the collector and the polarized porous sheet together before the dispersion medium is dried.

An electric double-layer capacitor having the above-mentioned electrode for an electric double-layer capacitor of the present invention and the above-mentioned electrically conductive adhesive for forming the above-mentioned electrically conductive intermediate layer are also included in the present invention.

BRIEF DESCRIPTION OF THE DRAWINGS

Fig. 1 is a partially enlarged cross-sectional schematic view showing an example of an electrode for an electric double-layer capacitor of the present invention.

Fig. 2 is a partially enlarged cross-sectional schematic view showing another example of an electrode for an electric double-layer capacitor of the present invention.

Fig. 3 is a partially enlarged cross-sectional schematic view showing another example of an electrode for an electric double-layer capacitor of the present invention.

Fig. 4 is a schematic perspective view showing a constitution in which an electrode for an electric double-layer capacitor of the present invention and a separator are combined.

Fig. 5 is a schematic perspective view showing a situation in which plural constituent elements of an electric double-layer capacitor are placed in parallel to each other.

Fig. 6 is a partially broken schematic perspective view showing a constitution of an electric double-layer capacitor fabricated in Examples (examples of the present invention).

Fig. 7 is a partially enlarged cross-sectional schematic view showing a constitution of a conventional electrode for an electric double-layer capacitor.

BEST MODE FOR CARRYING OUT THE INVENTION

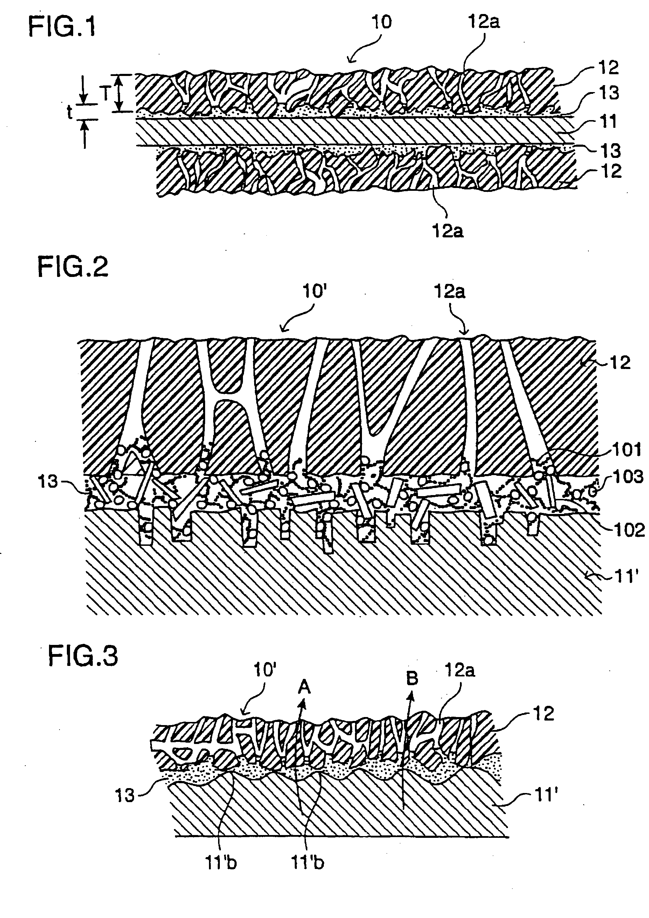

Fig. 1 shows an example of an embodiment of an electrode for an electric double-layer capacitor of the present invention (hereinafter occasionally referred to as merely "an electrode"). With regard to an electrode 10, polarized porous sheets 12, 12 each comprising constituent materials including carbonaceous materials for forming an electric double-layer (hereinafter occasionally referred to as merely "electric double-layer forming materials"), carbon materials for securing electrical conductivity and a binding agent is adhered to both faces of a collector 11 through electrically conductive intermediate layers 13, 13. As shown in Fig. 1, the polarized porous sheet 12, 12 each comprising the above-mentioned constituent materials are a porous body, and a part of the electrically conductive intermediate layer 13 enters holes 12a, 12a thereof.

As described above, with regard to an electrode for an electric double-layer capacitor, from the viewpoint of preventing deterioration in performance in the case of being used for an electric double-layer capacitor, it is necessary to perform drying treatment for removing adsorbed moisture, and drying treatment at high temperatures is requested for completing such moisture removal in a short time.

For example, in a polarized electrode body described in JP-A 11-154630, water glass, cellulose derivative such as carboxymethyl cellulose, and thermoplastic resin such as polyvinyl alcohol are applied to the adhesion (that is, a binder constituting the above-mentioned electrically conductive intermediate layer) of an electrode sheet (a polarized porous sheet) and a collector constituting the electrode body.

In the case of using the above-mentioned cellulose derivative and thermoplastic resin such as polyvinyl alcohol, however, the temperature of the above-mentioned drying treatment needs to be controlled to approximately 150°C or less, and drying treatment at temperatures over this damages the adhesive property of a polarized porous sheet and a collector, so that it is difficult to completely remove moisture in a short time.

On the other hand, water glass has more favorable thermal resistance (thermoresistance adhesive property) than the above-mentioned cellulose derivative and thermoplastic resin such as polyvinyl alcohol, and the adhesive property of a polarized porous sheet and a collector can be maintained even though drying temperature is raised to some extent; however, it is difficult to completely remove moisture contained in water glass itself, and nevertheless water glass can not meet a request for drying treatment in a short time.

Under these circumstances, the present inventors directed their attention to synthetic rubber as a binder constituting an electrically conductive intermediate layer for joining a polarized porous sheet and a collector, which is interposed therebetween. The use of synthetic rubber allows favorable thermoresistance adhesive property to be secured, and thus the adhesive property of a polarized porous sheet and a collector can sufficiently be maintained even though drying treatment at high temperatures (for example, approximately 230°C) is performed; therefore, moisture adsorbed in an electrode can be completely removed in a shorter time.

A general method for forming the above-mentioned electrically conductive intermediate layer is to apply a liquid electrically conductive adhesive such that carbon materials for securing electrical conductivity and a binder are dispersed (including the case of being partially dissolved) in a dispersion medium, which is removed.

In an electrically conductive adhesive, therefore, synthetic rubber used as a binder is typically applied in a state of existing in a dispersion medium as dispersed particles. Here, when carbon black having a comparatively small particle diameter and a large specific surface area is applied as carbon materials, the adsorbed quantity of synthetic rubber as a binder in a surface of carbon black is increased and, occasionally, a sufficient adhesive property is not exhibited in becoming an electrically conductive intermediate layer.

Meanwhile, when flake-like graphite having a comparatively large particle diameter and a small specific surface area is used as carbon materials, the adsorbed quantity of synthetic rubber in a surface of graphite is decreased and thereby a sufficient adhesive property can be secured. Flake-like graphite, however, enters a hole of a polarized porous sheet with difficulty by reason of having a comparatively large particle diameter and, occasionally, the effect of decreasing internal resistance by an action such that an electrically conductive intermediate layer enters a hole of a polarized porous sheet can not sufficiently be secured.

Loss η (energy loss) by charge and discharge of an electric double-layer capacitor is determined by the following equation.

$$\eta = 2CR/t$$

Here, C denotes capacity of the whole electric double-layer capacitor, R denotes internal resistance of an electric double-layer capacitor and t denotes charge duration. That is, energy loss of an electric double-layer capacitor is in direct proportion to internal resistance and capacity, and in inverse proportion to charge duration. Accordingly, for example, when internal resistance of an electric double-layer capacitor is doubled, charge duration needs to be doubled for equalizing energy losses. The shortening of charge duration has recently been requested; therefore, it is necessary to control internal resistance as low as possible.

It is publicly known that synthetic rubber is used as a binder of an electrically conductive adhesive, and in the case where synthetic rubber is used as a binder of an electrically conductive adhesive used for an electric double-layer capacitor, internal resistance of an electric double-layer capacitor is increased severalfold as compared with the case where thermoplastic resin is used for a binder; therefore, synthetic rubber is not adopted as a binder of an electrically conductive adhesive used for an electric double-layer capacitor.

In the present invention, carbon materials of two kinds or more having different particle diameters are adopted together with synthetic rubber as the constitution of an electrically conductive intermediate layer. In the case where two kinds or more (for example, two kinds, three kinds and four kinds) having different particle diameters are contained as carbon materials, an electrically conductive intermediate layer can possess carbon materials having such a particle diameter as to be capable of entering a hole of a polarized porous sheet together with carbon materials having so large a particle diameter as to be incapable of entering a hole of a polarized porous sheet and to allow the binding between particles of carbon materials by a small quantity of synthetic rubber particles. The present inventors, therefore, have completed the present invention by finding out that the adoption of such a constitution can improve thermoresistance adhesive property while securing low internal resistance on the same level as, for example, the polarized electrode body disclosed in JP-A 11-154630. The present invention will be hereinafter detailed.

Electrically Conductive Intermediate Layer and Electrically Conductive Adhesive

A polarized porous sheet used for an electrode of the present invention is a porous body as described above. With regard to an electrode of the present invention, a part of an electrically conductive intermediate layer containing carbon materials of at least two kinds and synthetic rubber enters a hole of a polarized porous sheet, whereby improvement in bonding strength by an anchor effect and decrease in internal resistance are intended.

The above-mentioned synthetic rubber serves as a binder in an electrically conductive intermediate layer. Specific examples of synthetic rubber include isoprene-based rubber such as isoprene rubber (polyisoprene); butadiene-based rubbers such as butadiene rubber (cis-1,4-polybutadiene) and styrene-butadiene rubber (SBR); diene-based special rubbers such as nitrile rubber (NBR) and chloroprene rubber; olefin-based rubbers such as ethylene propylene rubber, ethylene propylene diene rubber and acrylic rubber; hydrin rubber; urethane rubber; fluoro rubber, and the like.

SBR which is inexpensive and has diverse kinds is preferable among the above-mentioned synthetic rubbers. In addition, it is more preferable that SBR has a glass transition temperature (Tg) in a range between -5°C or more and 30°C or less. The use of SBR with such Tg allows favorable adhesion property and thermoresistance adhesive property to be secured. In the case of using activated carbon as electric double-layer forming materials in a polarized porous sheet, the activated carbon has a large surface area by reason of having a large number of pores, and thus increases the surface area of a polarized porous sheet to contribute to improvement in electric capacity per unit volume of an electrode. SBR having Tg within the above-mentioned range can restrain pores of the above-mentioned activated carbon from being blocked by the SBR, so that the properties of an electrode can be prevented from deteriorating due to such blocking of the pores.

That is to say, SBR having Tg under the above-mentioned range brings a tendency to improve adhesion property but decrease electric capacity for the reason that pores of activated carbon in a polarized porous sheet are easily blocked, while SBR having Tg over the above-mentioned range brings a tendency to deteriorate adhesion property for the reason that the flowability of SBR is deteriorated. Tg of SBR is further preferably in a range between 0°C or more and 10°C or less. Tg of SBR is a value measured in conformity to regulations of JIS K 7121.

Tg of SBR can roughly be controlled by adjusting copolymerization ratio of styrene and butadiene. That is, higher ratio of butadiene to styrene brings a tendency to render Tg lower, while higher ratio of styrene to butadiene brings a tendency to render Tg higher. Also, it is found that higher ratio of styrene to butadiene brings higher thermoresistance adhesive property, and too high ratio thereof hardens the coating to be lacking in flexibility.

The above-mentioned electrically conductive intermediate layer is formed of a liquid electrically conductive adhesive containing the after-mentioned carbon materials, the above-mentioned synthetic rubber and dispersion medium. The dispersion medium is not particularly limited, preferably including water, lower alcohols (such as methanol, ethanol, n-propanol and isopropanol) and the like. Typically, synthetic rubber can not directly be dissolved or dispersed in these dispersion media, so that it is preferred that a publicly known surface-active agent and a water-soluble polymer for forming protective colloid are added thereto. The above-mentioned components for forming an electrically conductive intermediate layer signify components (that is, nonvolatile components) among the above-mentioned electrically conductive adhesive except for a volatile component such as dispersion medium removed in the adhesion of a polarized porous sheet and a collector.

Among the above-mentioned synthetic rubbers, latex is also preferably used with regard to rubbers whose latex is easily available. For example, latex of SBR and NBR is general. In this case, all dispersion media of an electrically conductive adhesive may be derived from latex or other dispersion media may be added.

In the case of using such latex, rubber particles in the latex are preferably 50 to 300 nm in average particle diameter. With regard to latex containing rubber particles having such a particle diameter, an electrically conductive adhesive is fabricated by using carbon materials comprising a particle diameter such as the after-mentioned carbon black (for example, acetylene black) and a particle diameter such as the after-mentioned flake-like graphite, and when this adhesive is used for the adhesion of a polarized porous sheet and a collector, synthetic rubber particles can favorably enter a hole of a polarized porous sheet having the after-mentioned pore diameter together with carbon materials having a small particle diameter, so that the above-mentioned anchor effect and an effect of decreasing internal resistance become superior.

It is preferred that carbon materials of two kinds or more having different particle diameters, which are capable of securing electrical conductivity, are used as the above-mentioned carbon materials. Specific examples of carbon materials include graphite having high electrical conductivity by the presence of nonlocalized π electrons; carbon black (such as acetylene black, Ketchen black, furnace black, channel black and thermal lamp black) as spherical aggregate such that graphitic carbon crystallites aggregate in several layers to form a turbulent layer structure; and pyrolytic graphite such that hydrocarbons such as methane, propane and acetylene are pyrolyzed in vapor phase and deposited on a blackboard as a substrate in a thin-film state. Among these, flake-like graphite (in particular, natural graphite (scaly graphite)) is preferable in view of being capable of securing high electrical conductivity, and acetylene black is preferable in view of having a comparatively small particle diameter and being comparatively favorable in electrical conductivity Accordingly, a mixture of scaly graphite and acetylene black is a particularly preferable mode as the above-mentioned carbon materials.

The case where acetylene black and flake-like graphite are used as carbon materials will be described. The particle diameter of acetylene black is typically approximately 10 to 50 nm in average particle diameter (primary particle diameter). Flake-like graphite having a particle diameter of 0.5 to 20 μm in average particle diameter is preferably used, more preferably 1 to 10 μm. An electrically conductive intermediate layer is constituted so as to have carbon materials in which flake-like graphite and acetylene black of such average particle diameters are used together, whereby superior bonding strength and an effect of decreasing internal resistance can be secured by causing a part of an electrically conductive intermediate layer to enter a hole of the after-mentioned polarized porous sheet while improving electrical conductivity of the electrically conductive intermediate layer itself.

Thus, the use of carbon black such as acetylene black and flake-like graphite as carbon materials can be confirmed for the reason that an electrically conductive intermediate layer is exposed by peeling a polarized porous sheet or a collector off an electrode, and then a crystalline diffraction line form based on flake-like graphite and an amorphous diffraction line form based on carbon black are observed from a diffraction intensity curve obtained from the exposed surface according to an X-ray diffraction method.

The mixture ratio of acetylene black and flake-like graphite is preferably 1 : 10 to 1 : 1 in mass ratio, more preferably 1 : 5 to 1 : 2. Such a mixture ratio allows sufficient adhesive property and high effect of decreasing internal resistance to be simultaneously secured.

The average particle diameter of flake-like graphite is a value measured by a laser-type particle-size distribution measuring device ("SALD-2000", manufactured by Shimadzu Corp.). It is preferred that acetylene black having an average particle diameter within the above-mentioned range is selected in accordance with nominal values of a maker of acetylene black.

These carbon materials desirably have an ash content of 0.05% or less irrespective of kinds thereof. In the case where an electrode employing carbon materials with such a low ash content is applied to an electric double-layer capacitor, the lifetime of the capacitor can be prolonged.

The quantity of all carbon materials in the above-mentioned electrically conductive adhesive is preferably in a range between 3% by mass or more and 30 mass % or less, more preferably between 10% by mass or more and 25 mass % or less. The quantity of carbon materials less than the above-mentioned range brings the case where electrical conductivity of an electrically conductive intermediate layer becomes insufficient, while the quantity of carbon materials more than the above-mentioned range brings a tendency to deteriorate adhesive property due to the collapse of balance in quantity with a binder (the above-mentioned synthetic rubber) for forming an electrically conductive intermediate layer.

The quantity of synthetic rubber in the above-mentioned electrically conductive adhesive is preferably 7 mass % or less, more preferably 5 mass % or less. The quantity of synthetic rubber more than the above-mentioned range brings the case where internal resistance is increased too much. From the viewpoint of sufficiently securing adhesive property by an electrically conductive intermediate layer, the quantity of synthetic rubber in an electrically conductive adhesive is preferably 0.5 mass % or more, more preferably 2 mass %.

An electrically conductive adhesive of the present invention can contain carbon materials having a large particle diameter (for example, flake-like graphite) together with carbon materials having a small particle diameter (for example, carbon black such as acetylene black) capable of favorably entering a hole of a polarized porous sheet by the adoption of a constitution containing carbon materials of two kinds or more having different particle diameters. Accordingly, an electrically conductive intermediate layer having favorable electrical conductivity can be formed while decreasing carbon materials having a small particle diameter in quantity, so that a surface of synthetic rubber particles in a dispersion medium can be restrained from being covered with carbon materials having a small particle diameter, and favorable thermoresistance adhesive property can be secured when an electrically conductive intermediate layer is formed.

Fig. 2 shows an enlarged schematic view of a cross section of an electrode of the present invention. In Fig. 2, 101 are carbon materials having a small particle diameter (carbon black), 102 are carbon materials having a large particle diameter (flake-like graphite) and 103 are synthetic rubber particles. With regard to an electrode 10', in an electrically conductive intermediate layer 13, the carbon materials 102 having a large particle diameter and a part of the carbon materials 101 having a small particle diameter are bound to the synthetic rubber particles 103. Further, a part of the carbon materials 101 having a small particle diameter enters a hole 12a of a polarized porous sheet 12 together with the synthetic rubber particles 103. Such a structure allows an electrode of the present invention to secure favorable bonding strength including thermoresistance adhesive property and low internal resistance. Fig. 2 shows a mode such that a surface of a collector 11' is subjected to roughening treatment, and a part of the carbon materials 101 having a small particle diameter also enters a pit (a recess) formed on the surface of the collector 11' together with synthetic rubber particles 103, whereby more superior effect of improving bonding strength and effect of decreasing internal resistance can be exhibited.

Polarized Porous Sheet

A polarized porous sheet is a porous sheet obtained by mixing carbon materials for securing electrical conductivity, a binding agent and the like into electric double-layer forming materials (carbon electrode materials) to add ethanol and oil to this mixture, which is subjected to rolling and roll extrusion. That is, a gap between particulate electric double-layer forming materials becomes the hole 12a (Fig. 1) to form a porous sheet.

The electric double-layer forming materials as raw materials for a polarized porous sheet are not particularly limited so long as they are carbonaceous materials capable of forming the electric double-layer, being typically activated carbon. Various kinds of activated carbon generally used for a carbon electrode can be used as the activated carbon, being specifically such as to reactivate charcoal, coconut shell coal, brown coal and an uncarbonized substance such as sawdust by gases such as water vapor and carbon dioxide or by a chemical such as zinc chloride. A shape thereof may be powdery or particulate. Thus, the specific surface area of activated carbon is remarkably increased by reactivation; therefore, an electrode having large electric capacity per unit volume can be formed.

The above-mentioned electric double-layer forming materials may be graphitic crystallitic carbon produced by performing reactivation treatment for carbon materials. Ions and the like enter between crystal layers during the application of voltage, and thereby this crystallitic carbon forms an electric double-layer, and is available in accordance with the technique disclosed in JP-A 11-317333, for example.

Carbon materials for securing electrical conductivity are not particularly limited, and various kinds of carbon materials described as examples of an electrically conductive intermediate layer can be used.

A publicly known binding agent in the field of an electric double-layer capacitor can be used as a binding agent, for example, being generally fluorocarbon resins such as polytetrafluoroethylene (PTFE), polyvinylidene fluoride (PVDF) and ethylene-tetrafluoroethylene copolymer; cellulosic resin such as carboxymethyl cellulose, and the like.

The average pore diameter of a polarized porous sheet is preferably in a range between 0.1 $\mu$m or more and 5 $\mu$m or less, more preferably between 0.5 $\mu$m or more and 3 $\mu$m or less. An average pore diameter under the above-mentioned range brings the case where components for forming an electrically conductive intermediate layer enter a hole of a polarized porous sheet with difficulty, while an average pore diameter over the above-mentioned range brings the case where components for forming an electrically conductive intermediate layer deeply enter a hole of a polarized porous sheet and then an electrically conductive intermediate layer remaining on an interface between a collector and a polarized porous sheet is so greatly thinned as to decrease bonding strength. In the case where a polarized porous sheet is composed of activated carbon, pores of this activated carbon are covered with components for forming an electrically conductive intermediate layer, resulting in the possibility of deteriorating the capacitor performance. An average pore diameter referred to in this specification is a value measured by using a mercury press fitting-type porosimeter ("PORESIZER 9310", manufactured by Micrometrix Corp.).

The porosity of a polarized porous sheet is preferably in a range between 40% or more and 90% or less, more preferably between 60% or more and 80% or less. A porosity under the above-mentioned range brings the case where a sufficient quantity of an electrolytic solution can not be retained when used for a capacitor to increase internal resistance. Also, the quantity of components for forming an electrically conductive intermediate layer capable of entering a hole of a polarized porous sheet is decreased; therefore, occasionally the above-mentioned anchor effect and effect of decreasing internal resistance can not sufficiently secured. Meanwhile, a porosity over the above-mentioned range brings the case where holes that an electrically conductive intermediate layer does not enter exist in multitude when the quantity of an electrically conductive adhesive is in short supply, and thus the above-mentioned anchor effect becomes still insufficient. Also, an air layer (a liquid phase portion by injecting an electrolytic solution in the case of being used as a capacitor) is interposed between a polarized porous sheet and a collector, and occasionally the above-mentioned effect of decreasing internal resistance can not sufficiently secured. On the contrary, when the quantity of an electrically conductive adhesive is excessive, an electrically conductive intermediate layer deeply enters a hole of a polarized porous sheet. In the case where activated carbon is used for a polarized porous sheet, therefore, most pores of the activated carbon are covered with the components to decrease the specific surface area of activated carbon, occasionally leading to a cause of deteriorating the capacitor performance.

Here, a porosity (%) in this specification signifies a value determined as a ratio, $(V_0/V) \times 100$, of a hole volume (Vo) to a volume (V) of the whole polarized porous sheet. A hole volume can be determined by measuring true density (p) of a polarized porous sheet and mass (W) of a polarized porous sheet to use the following equation.

$$V_0 = V - (W/\rho)$$

The porosity and the average pore diameter of a polarized porous sheet can be adjusted by the kind of electric double-layer forming materials as constituent materials of a polarized porous sheet, the quantity of a binder, and roll pressure in fabricating a polarized porous sheet. The thickness of a polarized porous sheet is generally 0.05 to 1 mm, more preferably 0.08 to 0.5 mm.

A polarized porous sheet can be manufactured, for example, by the following method. A molding auxiliary agent (water, alcohols (such as methanol and ethanol), oils (such as petroleum and other oils), and the like) is added and mixed as required to the above-mentioned electric double-layer forming materials, carbon materials for securing electrical conductivity and a binding agent, and molded into a sheet shape by subjecting to roll processing and extrusion processing to remove the molding auxiliary agent and obtain a polarized porous sheet. In the case of using ethanol for a molding auxiliary agent, for example, a polarized porous sheet having the above-mentioned average pore diameter and porosity can be obtained on the conditions of a mixture ratio such as the above-mentioned carbon materials: 3 to 15 parts by mass, a binding agent: 5 to 15 parts by mass, ethanol: 50 to 300 parts by mass with respect to electric double-layer forming materials: 100 parts by mass, temperature: 50 to 100°C and roll extrusion.

Collector

Metallic materials such as aluminum, titanium, tantalum, nickel, iron, stainless steel and copper can be used for a collector, and aluminum is particularly preferable in view of superior electric conductivity, high stability (not dissolved and precipitated in an electrolytic solution) and inexpensive costs. These metals may have any shape of foil, plate and sheet. A collector may have a smooth surface as shown in Fig. 1, also in which case a gap capable of existing on an interface by point contact of the collector 11 with the polarized porous sheet 12 is filled with the electrically conductive intermediate layer 13, and thus air can be less interposed and additionally an electrically conductive intermediate layer enters the hole 12a of the polarized porous sheet 12, so that bonding strength by the anchor effect can be improved.

A more preferable mode of a collector includes a collector subjected to roughening treatment so that irregularities are formed on a surface. Fig. 2 shows an example of an electrode employing a collector whose surface is subjected to roughening treatment. With regard to this electrode 10', a part of an electrically conductive intermediate layer enters not merely the hole 12a of the polarized porous sheet 12 but also a pit of a collector 11', and thereby bonding strength of the polarized porous sheet 12 to the collector 11' is more improved. Air in the pit can be excluded by components for forming an electrically conductive intermediate layer entering the pit of the collector 11', so that electric resistance can be prevented from increasing due to the interposition of an electrolytic solution in the recess in the case of being used as a capacitor.

In an electrode employing a collector whose surface is subjected to roughening treatment, a structure as shown in Fig. 3 can be achieved by adjusting the quantity of an electrically conductive adhesive for forming an electrically conductive intermediate layer and the pressure in laminating a collector and a polarized porous sheet.

With regard to the electrode 10' in Fig. 3, the electrically conductive intermediate layer 13 is interposed between the collector 11' and the polarized porous sheet 12, and a convex portion 11'b of the collector 11' contacts microscopically with a convex portion of the polarized porous sheet 12 and then the electrically conductive intermediate layer 13 becomes a discontinuous layer (a pit formed on the surface of the collector 11' is not shown in Fig. 3). In such a case, internal resistance can further be decreased. That is, in an electrode with a structure such as Fig. 3, two kinds of an electrically conductive pass (an arrow A in Fig. 3) from the collector 11' to the polarized porous sheet 12 through the electrically conductive intermediate layer 13 and an electrically conductive pass (an arrow B in Fig. 3) from the collector 11' directly to the polarized porous sheet 12 are formed as electrically conductive passes. The pass B is lower in electric resistance than the pass A, so that electric resistance can be decreased in the whole electrode, resulting in the formation of an electric double-layer capacitor having low internal resistance and higher performance.

A process of subjecting a surface of a collector to roughening treatment is not particularly limited, being capable of adopting publicly known processes such as sandblasting and etching (for example, electrolytic etching and chemical etching). Among these, chemical etching employing chemicals is preferable for the reason that pores and irregularities formed on a surface of a collector are easily controlled to a shape appropriate for an anchor effect of an adhesive.

The thickness (the thickness before the treatment in the case of subjecting to roughening treatment) of a collector is generally 10 to 100 $\mu$m, more preferably 20 to 70 $\mu$m.

Depth (Degree of Entering) of Electrically Conductive Interlayer Entering Hole of Polarized Porous Sheet

It is recommended that the depth (degree of entering) of an electrically conductive intermediate layer entering a hole of a polarized porous sheet is 0.16% or more, preferably 0.25% or more and 15% or less, preferably 10% or less with respect to the thickness of a polarized porous sheet. When the entering depth of an electrically conductive intermediate layer is too small with respect to the thickness of a polarized porous sheet, the effect of improving adhesive strength by an anchor effect is occasionally insufficient, and air is interposed between a polarized porous sheet and an electrically conductive intermediate layer to occasionally become a cause of increasing internal resistance. Meanwhile, when the entering depth of an electrically conductive intermediate layer is too large with respect to the thickness of a polarized porous sheet, a polarized porous sheet is composed of activated carbon, and then a rate such that a pore of the activated carbon is covered with components for forming an electrically conductive intermediate layer is rendered so high as to decrease the specific surface area of the activated carbon and occasionally become a cause of deteriorating the properties as a capacitor.

The above-mentioned degree of entering is measured by the following process.

Epoxy resin is cured in a state of immersing an electrode in a solution in which the epoxy resin and a curing agent are mixed to thereafter cut an arbitrary place of an electrode hardened by the epoxy resin perpendicularly (in a thickness direction) and grind the cross section with sandpaper and alumina powders. Next, the ground cross section is observed by an optical microscope with a polarizing lens, and a ratio, $(t/T) \times 100$, of the average distance ($t$ in Fig. 1) between a tip portion of an electrically conductive intermediate layer on the side of a polarized porous sheet and a tip portion of a polarized porous sheet on the side of an electrically conductive intermediate layer to the average thickness ($T$ in Fig. 1) of a polarized porous sheet is determined as degree of entering.

The above-mentioned degree of entering can be adjusted by the average pore diameter of a polarized porous sheet, the quantity of components for forming an electrically conductive intermediate layer, and the pressure applied in laminating a polarized porous sheet and a collector. Manufacturing Method of Electrode for Electric Double-Layer Capacitor

The above-mentioned electrically conductive adhesive is first applied on a surface (a joint surface) of a polarized porous sheet and/or a collector. The applied surface may be either joint surface of a polarized porous sheet and a collector, or both joint surfaces thereof. A method of applying on a joint surface of a collector is more preferable. The reason therefor is that a surface of a polarized porous sheet is, so to speak, powder aggregate and holes opened over the whole surface, so that the application of an electrically conductive adhesive on a joint surface of a polarized porous sheet allows an electrically conductive adhesive to penetrate considerably deeply into a hole of a polarized porous sheet and occasionally the above-mentioned degree of entering exceeds the above-mentioned appropriate range. Also, from the viewpoint of productivity (mass productivity), it is preferable to apply on a collector having higher strength.

The applied quantity of an electrically conductive adhesive is preferably 2 to 15 $g/m^2$ in quantity after drying (that is, the quantity of components for forming an electrically conductive intermediate layer), more preferably 3 to 10 $g/m^2$.

Next, before dispersion medium is evaporated, a polarized porous sheet and a collector are laminated so that the applied electrically conductive adhesive is interposed. A method of laminating may be merely to superpose and stick, preferably to pressurize and compress after sticking. The latter method thereof allows the bonding to be more secured and additionally a part of an electrically conductive adhesive to be securely pressed into a pore of a polarized porous sheet. High capacity of a polarized porous sheet can be achieved for the reason that a polarized porous sheet is compressed for obtaining high density A method of pressurizing is not particularly limited, for example, a method of passing between a pair of rolls is comparatively easy. On this occasion, a clearance between rolls with respect to the total thickness of a laminate is, for example, preferably 30 to 90%, more preferably 50 to 70%. Such a clearance allows degree of entering to be within the above-mentioned range and additionally high capacity of a polarized porous sheet to be completed. A clearance under the above-mentioned range brings the possibility of causing the deformation of a collector and the peeling of a polarized porous sheet in accordance therewith.

Next, a volatile component (such as dispersion medium) in an electrically conductive adhesive is removed. A method of removing is not particularly limited, for example, a method of hot-air drying is appropriate. The temperature of hot air is preferably in the vicinity of the boiling point of a dispersion medium. The removal of the dispersion medium allows an electrically conductive intermediate layer to be formed for the electrode of the present invention as shown in Figs. 1 to 3. Figs. 2 and 3 show only one side of a collector.

Electric Double-Layer Capacitor

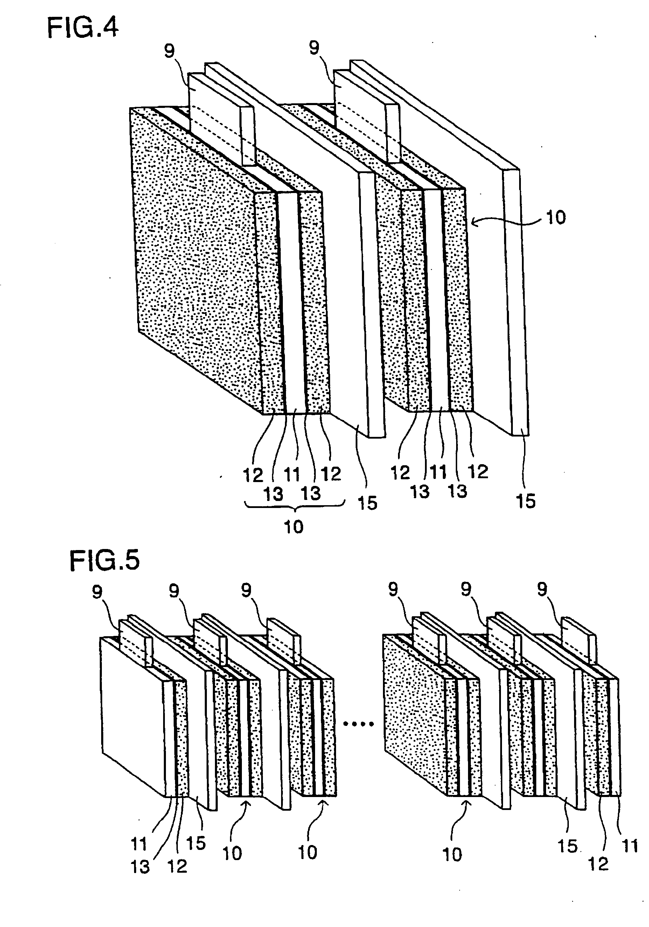

An electric double-layer capacitor of the present invention employs the above-mentioned electrode for an electric double-layer capacitor of the present invention, specifically being such that the electrode 10 of the present invention and a separator 15 are combined in alternate array as shown in Fig. 4 to place such plural combinations in parallel to each other (Fig. 5) and fill an electrolytic solution between the electrode 10 and the separator 15, which combinations, further, are typically stored in a case (such as metal case) (Fig. 6). In Fig. 6, 20 denotes a case, 21 denotes a top cover, 22 denotes an electrolytic solution and 23 denotes a collector lead.

A publicly known separator conventionally used for an electric double-layer capacitor can be used as the above-mentioned separator, for example, including porous sheets such as PTFE, polyethylene and polypropylene which are rendered hydrophilic; and a porous sheet obtained from sisal hemp.

Also, a publicly known electrolytic solution conventionally used for an electric double-layer capacitor can be adopted as an electrolytic solution. Examples of a solvent of an electrolytic solution include carbonates such as propylene carbonate and butylene carbonate; lactones such as $\beta$-butyrolactone and $\gamma$-butyrolactone; sulfolane; amide-based solvent such as dimethylformamide; nitromethane; 1,2-dimethoxyethane; acetonitrile, and the like. Examples of an electrolyte of an electrolytic solution include acids such as fluorine-containing acids such as tetrafluoroboric acid, hexafluorophosphoric acid, hexafluoroarsenic acid, hexafluoroantimonic acid and trifluoroalkylsulfonic acid; and chlorine-containing acids such as perchloric acid and tetrachloroaluminic acid; alkali metallic salt of these acids (such as sodium salt and potassium salt), alkaline earth metallic salt thereof (such as magnesium salt and calcium salt), ammonium salt thereof, tetraalkylammonium salt thereof (such as tetramethylammonium salt and tetraethylammonium salt), and tetraalkylphosphonium salt thereof (such as tetramethylphosphonium salt and tetraethylphosphonium salt).

In Fig. 4, 9 is a collector terminal mounted on a collector, which collector terminal 9 is mounted with a collector lead (not shown). Figs. 4 and 5 show an example of employing an electrode having a structure shown in Fig. 1, and these electrodes may have a structure shown in Figs. 2 and 3. Plural electrodes placed in parallel to each other may all have the same structure or may have different structures. In addition, with regard to an electrode placed at the outermost end among plural electrodes placed in parallel to each other, an electrode such that a polarized porous sheet is laminated only on one side of a collector can be used as shown in Fig. 5.

Effect of the Invention

An electric double-layer capacitor of the present invention has low internal resistance, high electric capacity and can perform high output density by reason of employing an electrode for an electric double-layer capacitor of the present invention completing lower internal resistance than conventionally

An electrode for an electric double-layer capacitor of the present invention adopts the above-mentioned specific constitution for an electrically conductive intermediate layer interposed between a collector and a polarized porous sheet, and thus has extremely low internal resistance and additionally is superior in bonding strength and durability (thermoresistance adhesive property) of a polarized porous sheet to a collector. Bonding strength of a polarized porous sheet to a collector is so high that the electrode is also superior in manufacture, preservability and conveyance property, such as to manufacture a continuous electrode, which can be preserved and conveyed in a state of being rolled up.

An electrically conductive adhesive of the present invention is appropriate for manufacturing an electrode for an electric double-layer capacitor of the present invention.

An electric double-layer capacitor of the present invention has low internal resistance, high electric capacity and can complete high output density by reason of employing an electrode for an electric double-layer capacitor of the present invention completing lower internal resistance.

EXAMPLES

The present invention will be hereinafter detailed on the basis of examples; however, the following examples do not limit the present invention, and the modification in a range of no deviation from the above-mentioned and after-mentioned spirit is all included in the technical scope of the present invention.

Example 1

Polarized porous sheet

Ethanol: 100 parts by mass were added and kneaded to a mixture comprising activated carbon powders ("RP-20", made by Kuraray Chemical Co., Ltd., specific surface area: 2000 $m^2$/g, average particle diameter: 8 $\mu$m): 85 parts by mass, Ketchen black ("EC600JD", made by Ketchen Black International): 7 parts by mass and PTFE powders: 8 parts by mass, and then subjected to rolling to obtain a continuous polarized porous sheet having width: 100 mm, thickness: 0.3 mm, porosity: 65% and average pore diameter: 0.8 $\mu$m.

Collector

High-purity etched aluminum foil ("C513", made by KDK Co., Ltd.) having width: 150 mm and thickness: 50 $\mu$m was used for a collector.

Electrically conductive adhesive

Natural scaly graphite ("GRAPHITE POWDERS", made by Hitachi Powdered Metals Co., Ltd.) having ash content: 0.02% and average particle diameter: 4 $\mu$m and acetylene black ("DENKA BLACK", made by Denki Kagaku Kogyo K.K.) having ash content: 0.02% and average particle diameter (primary particle diameter): 35 nm were used as carbon materials. SBR latex ("GRADE 0850", made by JSR Corp.) was used as synthetic rubber. These were mixed so as to have a composition shown in Table 1 and obtain an electrically conductive adhesive.

Manufacture of electrode

An electrically conductive adhesive was applied on both sides of a collector by using a spreader roll. The applied quantity was 30 g/$m^2$ (7 g/$m^2$ in quantity after drying) per one side. After applying, a continuous polarized porous sheet was superposed on applied surfaces (both sides) of an electrically conductive adhesive on a collector to obtain a laminated sheet through a compression roll (clearance= 70%). This laminated sheet was made to pass through a continuous hot-air dryer set at temperature: 150°C in 3 minutes to remove dispersion medium from an electrically conductive adhesive and obtain a continuous electrode.

Manufacture of electric double-layer capacitor

A rectangular electrode of 10 cm square was stamped in plural out of the above-mentioned continuous electrode, and a collector of each electrode was mounted by welding with a collector terminal of 2 cm $\times$ 10 cm. Thereafter, these electrodes and separators were combined as shown in Fig. 4, which combination was superposed by 15 pairs. A separator ("BSP 0102560-2", made by Japan Gore-Tex Inc., thickness: 25 $\mu$m, porosity: 60%) such that a drawn porous PTFE film was rendered hydrophilic was used for the separator. These combinations were vacuum-dried at a temperature of 150°C for 72 hours and thereafter stored in an aluminum case, and thereafter each collector terminal was attached to a collector lead, which was further attached to a positive terminal and a negative terminal. Next, a propylene carbonate solution (concentration: 1 mol/L) of tetraethylammonium tetrafluoroborate was injected as an electrolytic solution into the case, which was sealed with a top cover to thereby obtain a square-shaped electric double-layer capacitor.
The above-mentioned electrode and electric double-layer capacitor were evaluated in the following manner. The results are shown in Tables 2 and 3.

Tape peel test (heat run test)

After the above-mentioned electrode was dried at a predetermined temperature for 24 hours, a polarized porous sheet portion thereof was notched in a check pattern (a check is of 5 $\times$ 5 mm and the number of checks is 144) to stick an adhesive tape ("DANPRON ACE II", made by Nitto Denko Corp.) on this notched surface and press the polarized porous sheet and the adhesive tape by fingers so sufficiently as to remove air bubbles therebetween, and thereafter observe a peel state of the polarized porous sheet portion by peeling the tape.

Electrostatic capacitance density

With regard to the above-mentioned electric double-layer capacitor, one cycle was defined as a process of charging for 1500 seconds on the conditions of 10 mA/$cm^2$ and 2.7 V and discharging until becoming 0 V on the conditions of 10 mA/$cm^2$, and a discharge curve from discharge starting to 0 V in the tenth cycle was integrated on the occasion of continuously performing ten cycles to determine electrostatic capacitance of the electric double-layer capacitor in charging in the tenth cycle, which capacitance was divided by electrode volume to calculate electrostatic capacitance density Direct current internal resistance
Direct current internal resistance was determined by using the equation "V = IR" when measuring the above-mentioned electrostatic capacitance density.

High-temperature endurance test

With regard to the above-mentioned electric double-layer capacitor, one cycle was defined as a process of charging for 100 hours on the conditions of 10 mA/cm$^2$ and 2.7 V and discharging until becoming 0 V on the conditions of 10 mA/cm$^2$ under a temperature of 70°C to repeat this process. Electrostatic capacitance in the first cycle and a cycle after the passage of 1000 hours was determined by the above method described in electrostatic capacitance density to evaluate the results by maintenance ratio, 100 × (electrostatic capacitance in a cycle after the passage of 1000 hours) /(electrostatic capacitance in the first cycle) (%), of electrostatic capacitance after the passage of 1000 hours to measurement starting (the first cycle).

Example 2

An electrode and an electric double-layer capacitor were fabricated and evaluated in the same manner as Example 1 except for modifying the constitution of an electrically conductive adhesive as shown in Table 1. SBR latex used in Example 2 was "GRADE 0597C", made by JSR Corp. The results are shown in Tables 2 and 3.

Example 3

An electrode and an electric double-layer capacitor were fabricated and evaluated in the same manner as Example 1 except for modifying the constitution of an electrically conductive adhesive as shown in Table 1. SBR latex used in Example 3 was "GRADE 0668", made by JSR Corp. The results are shown in Tables 2 and 3.

Example 4

An electrode and an electric double-layer capacitor were fabricated and evaluated in the same manner as Example 1 except for modifying the constitution of an electrically conductive adhesive as shown in Table 1. The results are shown in Tables 2 and 3.

Example 5

An electrode and an electric double-layer capacitor were fabricated and evaluated in the same manner as Example 1 except for modifying the constitution of an electrically conductive adhesive as shown in Table 1. Carbon materials used in Example 5 were natural scaly graphite ("GRAPHITE POWDERS", made by Hitachi Powered Metals Co., Ltd.) having ash content: 0.05% and average particle diameter: 10 μm and acetylene black ("DENKA BLACK", made by Denki Kagaku Kogyo K.K.) having ash content: 0.02% and average particle diameter (primary particle diameter): 35 nm. The results are shown in Tables 2 and 3.

Example 6

An electrode and an electric double-layer capacitor were fabricated and evaluated in the same manner as Example 1 except for modifying the constitution of an electrically conductive adhesive as shown in Table 1. The results are shown in Tables 2 and 3.

Example 7

An electrode and an electric double-layer capacitor were fabricated and evaluated in the same manner as Example 1 except for modifying the constitution of an electrically conductive adhesive as shown in Table 1. The results are shown in Tables 2 and 3.

Comparative Example 1

An electrode and an electric double-layer capacitor were fabricated and evaluated in the same manner as Example 1 except for employing only acetylene black ("DENKA BLACK", made by Denki Kagaku Kogyo K.K.) having average particle diameter: 2 μm as carbon materials with regard to an electrically conductive adhesive. The content of acetylene black was 20 mass % with respect to the total quantity of an electrically conductive adhesive. The results are shown in Tables 2 and 3.

Comparative Example 2

An electrode and an electric double-layer capacitor were fabricated and evaluated in the same manner as Example 1 except for replacing synthetic rubber (SBR) with carboxymethyl cellulose ("CMC DAICEL", made by Daicel Chemical Industries, Ltd.) and employing natural scaly graphite having an average particle diameter of 4 $\mu$m for carbon materials with regard to an electrically conductive adhesive. The content of scaly graphite was 20 mass % with respect to the total quantity of an electrically conductive adhesive. The results are shown in Tables 2 and 3. This Comparative Example 1 corresponds to an example of JP-A 11-154630. Comparative Example 3

An electrode and an electric double-layer capacitor were fabricated and evaluated in the same manner as Example 1 except for replacing synthetic rubber (SBR) with thermosetting polyimide ("U-VARNISH", made by Ube Industries, Ltd.) and employing natural scaly graphite having an average particle diameter of 4 $\mu$m for carbon materials with regard to an electrically conductive adhesive. The content of scaly graphite was 20 mass % with respect to the total quantity of an electrically conductive adhesive. The results are shown in Tables 2 and 3.

Table 1

| | Synthetic rubber | | | | Carbon materials | | | | | | |
|---|---|---|---|---|---|---|---|---|---|---|---|
| | | | | | Scaly graphite | | | Acetylene black | | | |
| | Kinds | Tg (°C) | Average particle diameter (nm) | Content (mass %) | Ash content (%) | Average particle diameter ($\mu$m) | Content with respect to total quantity of carbon materials (mass %) | Ash content (%) | Average particle diameter of primary particles (nm) | Content with respect to Total Quantity of Carbon Materials (mass %) | Content (mass %) |
| Example 1 | SBR | 7 | 135 | 3 | 0.02 | 4 | 75 | 0.02 | 35 | 25 | 20 |
| Example 2 | SBR | 28 | 125 | 3 | 0.02 | 4 | 75 | 0.02 | 35 | 25 | 20 |
| Example 3 | SBR | -4 | 180 | 3 | 0.02 | 4 | 75 | 0.02 | 35 | 25 | 20 |
| Example 4 | SBR | 7 | 135 | 7 | 0.02 | 4 | 75 | 0.02 | 35 | 25 | 20 |
| Example 5 | SBR | 7 | 135 | 3 | 0.05 | 10 | 75 | 0.02 | 35 | 25 | 20 |
| Example 6 | SBR | 7 | 135 | 3 | 0.02 | 4 | 75 | 0.02 | 35 | 25 | 10 |
| Example 7 | SBR | 7 | 135 | 3 | 0.02 | 4 | 75 | 0.02 | 35 | 25 | 30 |

Table 2

|  | Tape peel test, drying temperature (°C) | | |
|---|---|---|---|
|  | 150 | 200 | 230 |
| Example 1 | No Peeling | No Peeling | No Peeling |
| Example 2 | No Peeling | No Peeling | No Peeling |
| Example 3 | No Peeling | No Peeling | No Peeling |
| Example 4 | No Peeling | No Peeling | No Peeling |
| Example 5 | No Peeling | No Peeling | No Peeling |
| Example 6 | No Peeling | No Peeling | No Peeling |
| Example 7 | No Peeling | No Peeling | No Peeling |
| Comparative Example 1 | No Peeling | No Peeling | Partially Peeled |
| Comparative Example 2 | No Peeling | Partially Peeled | Completely Peeled |
| Comparative Example 3 | No Peeling | No Peeling | No Peeling |

Table 3

|  | Electrostatic capacitance density (F/cm$^3$) | Direct current internal resistance ($\Omega$) | High-temperature endurance test (%) |
|---|---|---|---|
| Example 1 | 17.0 | 1.0 | 90 |
| Example 2 | 16.8 | 1.1 | 90 |
| Example 3 | 16.0 | 1.2 | 88 |
| Example 4 | 16.2 | 1.4 | 89 |
| Example 5 | 16.9 | 1.2 | 85 |
| Example 6 | 17.0 | 1.4 | 86 |
| Example 7 | 17.0 | 1.0 | 85 |
| Comparative Example 1 | 16.6 | 2.0 | 85 |
| Comparative Example 2 | 16.6 | 1.1 | 78 |
| Comparative Example 3 | 16.7 | 2.2 | 85 |

INDUSTRIAL APPLICABILITY

The present invention can be advantageously utilized for the improvement of an electric double-layer capacitor.

**Claims**

1.  An electrode for an electric double-layer capacitor, wherein a polarized porous sheet (12) comprising a constituent material including a carbonaceous material for forming an electric double-layer, a carbon material for securing electrical conductivity and a binding agent is integrated with at least one face of a collector (11') through an electrically conductive intermediate layer, said electrically conductive intermediate layer containing synthetic rubber and carbon materials of two kinds or more having different particle diameters, **characterised in that**
    said carbon materials comprise flake-like graphite having large particle diameter (102) and carbon black having small particle diameter (101), and
    said synthetic rubber (103) is styrene-butadiene rubber having a glass transition temperature of -5 deg C to 30 deg C.

**2.** An electrode for an electric double-layer capacitor according to claim 1, wherein said electrically conductive intermediate layer is formed by using an electrically conductive adhesive containing said carbon materials, said synthetic rubber and a dispersion medium, and all carbon materials are 3 to 30 mass % in the electrically conductive adhesive.

**3.** An electrode for an electric double-layer capacitor according to claim 2, wherein said synthetic rubber is 7 mass % or less in said electrically conductive adhesive.

**4.** An electrode for an electric double-layer capacitor according to claim 1, wherein said polarized porous sheet has an average pore diameter of 0.1 to 5 $\mu$m and a porosity of 40 to 90%.

**5.** An electrode for an electric double-layer capacitor according to claim 1, wherein said collector is composed of aluminum.

**6.** An electrode for an electric double-layer capacitor according to claim 1, wherein a surface of said collector is subjected to roughening treatment.

**7.** A method of manufacturing an electrode for an electric double-layer capacitor, comprising the steps of:

applying (C) an electrically conductive adhesive containing synthetic rubber, carbon materials of two kinds or more having different particle diameters and a dispersion medium to a joint surface of (A) a polarized porous sheet comprising a constituent material including a carbonaceous material for forming an electric double-layer, a carbon material for securing electrical conductivity and a binding agent and/or (B) a collector; and
pressing a part of a nonvolatile component of the electrically conductive adhesive into a pore of the polarized porous sheet by sticking and pressurizing the collector and the polarized porous sheet together before the dispersion medium is dried; **characterised in that**
said carbon materials comprise flake-like graphite having large particle diameter and carbon black having small particle diameter, and
said synthetic rubber is styrene-butadiene rubber with a glass transition temperature of -5 deg C to 30 deg C.

**8.** An electric double-layer capacitor having an electrode for an electric double-layer capacitor according to claim 1.

**9.** An electrically conductive adhesive for use in the method according to claim 7, **characterised in that** said electrically conductive adhesive containing carbon materials comprising flake-like graphite having large particle diameter and carbon black having small particle diameter, styrene-butadiene rubber with a glass transition temperature of -5 deg C to 20 30 deg C and dispersion medium.

**10.** An electrically conductive adhesive according to claim 9, wherein all carbon materials are 3 to 30 mass % in said electrically conductive adhesive.

**11.** An electrically conductive adhesive according to claim 10, wherein said synthetic rubber is 7 mass % or less in said electrically conductive adhesive.

**Patentansprüche**

**1.** Elektrode für einen elektrischen Doppelschichtkondensator, wobei eine polarisierte poröse Platte (12), die ein konstitutives Material umfasst, das ein kohlenstoffhaltiges Material zum Bilden einer elektrischen Doppelschicht, ein Kohlenstoffmaterial zum Sicherstellen der elektrischen Leitfähigkeit und ein Bindemittel einschließt, mit wenigstens einer Fläche einer Sammelelektrode (11') durch eine elektrisch leitfähige Zwischenschicht integriert ist, und die elektrisch leitfähige Zwischenschicht Synthesekautschuk und Kohlenstoffmaterialien von zwei oder mehreren Arten, die verschiedene Teilchendurchmesser aufweisen, enthält, **dadurch gekennzeichnet, dass**
die Kohlenstoffmaterialien flockenähnlichen Graphit, der einen großen Teilchendurchmesser (102) aufweist, und Ruß, der einen kleinen Teilchendurchmesser (101) aufweist, umfassen und
der Synthesekautschuk (103) Styrol-Butadien-Kautschuk ist, der eine Glasübergangstemperatur von -5 Grad C bis 30 Grad C aufweist.

**2.** Elektrode für einen elektrischen Doppelschichtkondensator nach Anspruch 1, wobei die elektrisch leitfähige Zwischenschicht durch Verwenden eines elektrisch leitfähigen Klebstoffs, der die Kohlenstoffmaterialien, den Synthesekautschuk und ein Dispersionsmedium enthält, gebildet wird und alle Kohlenstoffmaterialien in dem elektrisch leitfähigen Klebstoff 3 bis 30 Masse-% betragen.

3. Elektrode für einen elektrischen Doppelschichtkondensator nach Anspruch 2, wobei der Synthesekautschuk in dem elektrisch leitfähigen Klebstoff 7 Masse-% oder weniger beträgt.

4. Elektrode für einen elektrischen Doppelschichtkondensator nach Anspruch 1, wobei die polarisierte poröse Platte einen durchschnittlichen Porendurchmesser von 0,1 bis 5 $\mu$m und eine Porosität von 40 bis 90 % aufweist.

5. Elektrode für einen elektrischen Doppelschichtkondensator nach Anspruch 1, wobei die Sammelelektrode aus Aluminium besteht.

6. Elektrode für einen elektrischen Doppelschichtkondensator nach Anspruch 1, wobei eine Oberfläche der Sammelelektrode einer Aufraubehandlung unterworfen wird.

7. Verfahren zum Herstellen einer Elektrode für einen elektrischen Doppelschichtkondensator, umfassend die Schritte des:

Aufbringens (C) eines elektrisch leitfähigen Klebstoffs, der Synthesekautschuk, Kohlenstoffmaterialien von zwei oder mehreren Arten, die verschiedene Teilchendurchmesser aufweisen, und ein Dispersionsmedium enthält, auf eine gemeinsame Oberfläche (A) einer polarisierten porösen Platte, die ein konstitutives Material umfasst, das ein kohlenstoffhaltiges Material zum Bilden einer elektrischen Doppelschicht, ein Kohlenstoffmaterial zum Sicherstellen der elektrischen Leitfähigkeit und ein Bindemittel einschließt und/oder (B) einer Sammelelektrode; und

Drückens eines Teils einer nichtflüchtigen Komponente des elektrisch leitfähigen Klebstoffs in eine Pore der polarisierten porösen Platte durch Zusammenkleben und Unterdrucksetzen der Sammelelektrode und der polarisierten porösen Platte, bevor das Dispersionsmedium getrocknet ist; **dadurch gekennzeichnet, dass** die Kohlenstoffmaterialien flockenähnlichen Graphit, der einen großen Teilchendurchmesser aufweist, und Ruß, der einen kleinen Teilchendurchmesser aufweist, umfassen und der Synthesekautschuk Styrol-Butadien-Kautschuk mit einer Glasübergangstemperatur von -5 Grad C bis 30 Grad C ist.

8. Elektrischer Doppelschichtkondensator, der eine Elektrode für einen elektrischen Doppelschichtkondensator nach Anspruch 1 aufweist.

9. Elektrisch leitfähiger Klebstoff zur Verwendung bei dem Verfahren nach Anspruch 7, **dadurch gekennzeichnet, dass** der elektrisch leitfähige Klebstoff Kohlenstoffmaterialien, die flockenähnlichen Graphit, der einen große Teilchendurchmesser aufweist, und Ruß, der einen kleinen Teilchendurchmesser aufweist, umfassen, Styrol-Butadien-Kautschuk mit einer Glasübergangstemperatur von - 5 Grad C bis 30 Grad C und Dispersionsmedium enthält.

10. Elektrisch leitfähiger Klebstoff nach Anspruch 9, wobei alle Kohlenstoffmaterialien in dem elektrisch leitfähigen Klebstoff 3 bis 30 Masse-% betragen.

11. Elektrisch leitfähiger Klebstoff nach Anspruch 10, wobei der Synthesekautschuk in dem elektrisch leitfähigen Klebstoff 7 Masse-% oder weniger beträgt.

**Revendications**

1. Electrode pour condensateur à double couche électrique, dans laquelle une feuille poreuse polarisée (12) comprenant un matériau constitutif incluant un matériau carbonacé permettant de former une double couche électrique, un matériau carboné permettant de fixer la conductivité électrique, et un agent liant, est intégrée à au moins une face d'un collecteur (11') par le biais d'une couche intermédiaire conduisant l'électricité, ladite couche intermédiaire conduisant l'électricité contenant un caoutchouc synthétique et des matériaux carbonés d'au moins deux types ayant des diamètres particulaires différents, **caractérisée en ce que** lesdits matériaux carbonés comprennent du graphite en paillettes ayant un grand diamètre particulaire (102) et du noir de carbone ayant un petit diamètre particulaire (101); et ledit caoutchouc synthétique (103) est un caoutchouc de styrène-butadiène ayant une température de transition vitreuse de -5°C à 30°C.

2. Electrode pour condensateur à double couche électrique selon la revendication 1, dans laquelle ladite couche intermédiaire conduisant l'électricité est formée à l'aide d'un adhésif électroconducteur contenant lesdits matériaux carbonés, ledit caoutchouc synthétique et un milieu de dispersion, et tous les matériaux carbonés sont présents à raison de 3 à 30% en masse dans l'adhésif électroconducteur.

3. Electrode pour condensateur à double couche électrique selon la revendication 2, dans laquelle ledit caoutchouc synthétique est présent à raison de 7% en masse ou moins dans ledit adhésif électroconducteur.

4. Electrode pour condensateur à double couche électrique selon la revendication 1, dans laquelle ladite feuille poreuse polarisée a un diamètre de pore moyen de 0,1 à 5 $\mu$m et une porosité de 40 à 90%.

5. Electrode pour condensateur à double couche électrique selon la revendication 1, dans laquelle ledit collecteur est composé d'aluminium.

6. Electrode pour condensateur à double couche électrique selon la revendication 1, dans laquelle une surface dudit collecteur est soumise à un traitement de rugosification.

7. Procédé de fabrication d'une électrode pour condensateur à double couche électrique, comprenant les étapes consistant à:

appliquer (C) un adhésif électroconducteur contenant un caoutchouc synthétique, des matériaux carbonés d'au moins deux types ayant des diamètres particulaires différents et un milieu de dispersion sur une surface d'assemblage de (A) une feuille poreuse polarisée comprenant un matériau constitutif contenant un matériau carbonacé pour former une double couche électrique, un matériau carboné pour fixer la conductivité électrique et un agent de liaison et/ou (B) un collecteur; et
presser une partie d'un composant non volatil de l'adhésif électroconducteur dans un pore de la feuille poreuse polarisée par collage et pressurisation du collecteur et de la feuille poreuse polarisée ensemble avant que le milieu de dispersion ne soit séché; **caractérisé en ce que**
lesdits matériaux carbonés comprennent du graphite en paillettes ayant un grand diamètre particulaire et du noir de carbone ayant un petit diamètre particulaire, et
ledit caoutchouc synthétique est un caoutchouc de styrène-butadiène ayant une température de transition vitreuse de -5°C à 30°C.

8. Condensateur à double couche électrique ayant une électrode pour condensateur à double couche électrique selon la revendication 1.

9. Adhésif électroconducteur destiné à être utilisé dans le procédé selon la revendication 7, **caractérisé en ce que** ledit adhésif électroconducteur contient des matériaux carbonés comprenant du graphite en paillettes ayant un grand diamètre particulaire et du noir de carbone ayant un petit diamètre particulaire, un caoutchouc de styrène-butadiène ayant une température de transition vitreuse de -5°C à 30°C et un milieu de dispersion.

10. Adhésif électroconducteur selon la revendication 9, dans lequel tous les matériaux carbonés sont présents à raison de 3 à 30% en masse dans ledit adhésif électroconducteur.

11. Adhésif électroconducteur selon la revendication 10, dans lequel ledit caoutchouc synthétique est présent à raison de 7% en masse ou moins dans ledit adhésif électroconducteur.

FIG.1

FIG.2

FIG.3

EP 1 672 652 B1

FIG.4

FIG.5

20

# FIG.6

ANODE TERMINAL CATHODE TERMINAL

# FIG.7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11154630 A
- JP 11162787 A
- JP 11317333 A